# EUROPÄISCHE PATENTSCHRIFT

(11) **EP 0 855 978 B1**
(45) Veröffentlichungstag und Bekanntmachung des Hinweises auf die Patenterteilung: **06.05.1999**
(21) Anmeldenummer: 96945348.9
(22) Anmeldetag: 02.10.1996
(51) Int. Cl.: B61D 17/04, B62D 31/02

(54) **MODULELEMENT UND HERSTELLUNGSVERFAHREN**
MODULAR ELEMENT AND MANUFACTURING PROCESS
ELEMENT MODULAIRE ET PROCEDE DE FABRICATION

(30) Priorität: 18.10.1995 DE 19538793; 15.05.1996 DE 19619617
(43) Veröffentlichungstag der Anmeldung: 05.08.1998
(73) Patentinhaber: Talbot GmbH & Co. KG, 52070 Aachen (DE)
(72) Erfinder: ALTENBURG, Klaus, D-52146 Würselen (DE); GOERRES, Franz-Peter, D-52249 Eschweiler (DE); KREUTZ, Hans-Dieter, D-52146 Würselen (DE); STRAUCH, Hans-Wilhelm, B-4731 Eynatten (BE); ZIMMERMANN, Michael, 52066 Aachen (DE); DEDERICHS, August, 52072 Aachen (DE)
(86) Internationale Anmeldenummer: DE9601896
(87) Internationale Veröffentlichungsnummer: WO9714596

(56) Entgegenhaltungen:
- BE-A- 568 805
- DE-A- 2 031 546
- DE-B- 1 108 576

## Beschreibung

Die Erfindung bezieht sich auf ein Modulelement, insbesondere zum Bau von Großkarosserien oder Behältern, mit den Merkmalen des Oberbegriffs des Patentanspruchs 1 und auf ein Verfahren zu dessen Herstellung nach dem nebengeordneten Verfahrensanspruch 14.

In DE-A-44 10 998 ist ein schnellmontagefähiges Randprofilpaar für Modulelemente im Fahrzeug- und Behälterbau beschrieben, das aus komplementären separaten Formschlußleisten besteht, mit denen die Modulelemente gegeneinander zentriert und vorläufig gefügt werden können. Die endgültige feste Verbindung zwischen den Modulelementen wird durch kraft- und formschlüssige Befestigungselemente (kaltverformbare Nietbolzen) hergestellt, die aneinanderliegende Stege der vorgefügten Randprofile durchdringen und schubfest und gegen Querverschiebung gesichert aneinander festlegen. Durch das Zusammenwirken der Bolzen und der komplementären Formschluß-Randelemente wird eine momentensteife Verbindung der Module geschaffen.
Diese für den Bau von Großkarosserien wie Eisenbahn-Personenwagen vorgesehenen Modulelemente können vorteilhaft ausschließlich von außen gefügt werden. Es gibt daher keine Restriktionen gegen den Vollausbau der Module vor dem Fügen, d. h. der Innenausbau kann modulweise komplettiert werden.
Die massiven, mit den Spantenden verschweißten Stahl-Randprofile machen die Modulelemente jedoch relativ schwer.

Als Vorstufe zum erstgenannten Stand der Technik ist ein aus ebenfalls geschweißt vorgefertigten eigensteifen Wandmodulen kalt fügbarer Wagenkastenaufbau für Eisenbahn-Reisezugwagen gemäß EP-A-0 573 384 anzusehen. Zum Verbinden der Wandmodule untereinander werden ebenfalls Nietbolzen verwendet. Die in Längsrichtung der Module verlaufenden Randprofile sind hier integral durch Abkantungen aus der Außenhaut gebildet und mit Reihen von Bohrungen zum Durchstecken der besagten Nietbolzen versehen. Diese Randprofile stellen Biege- und Knicksteifigkeit der Wandteile her. Auch bilden sie die Basis für die Kaltfügetechnik und die Anschlußkanten und -ebenen beim Zusammenfügen der verschiedenen Module.
Die als Z-Profile ausgeführten Spanten des tragenden Gerippes stoßen stumpf an die Randprofile; jeweils zwei Spantenden liegen einander gegenüber. Über die Fuge zwischen den beiden Modulen sind die Spanten durch einen Nietbolzen direkt miteinander verbunden, der sowohl zwei Flansche der Spanten als auch je einen Schenkel der abgekanteten Randprofile durchdringt.
Weil die Nietbolzen hinter der Außenhaut liegen, muß die Trennfuge beim Fügen der Module von der Wageninnenseite her zugänglich sein, damit man die Werkzeuge von innen ansetzen kann. Die notwendigen Freiräume für den Werkzeugeinsatz behindern den Innen-Vollausbau der Module.

Die Randprofile dieser vorbekannten Lösungen müssen paarweise profilkomplementär ausgeführt sein, so daß die gegenüberliegenden Ränder der Modulelemente unterschiedlich ausgebildet sind. Der Kraftfluß in der Trennfuge zwischen den Modulelementen verläuft im wesentlichen über die Randprofile, an welche die lasttragenden Spanten bzw. Säulen endseitig stumpf angeschlossen sind.

Der Erfindung liegt die **Aufgabe** zugrunde, schnellmontagefähige Modulelemente ausgehend vom vorgenannten Stand der Technik hinsichtlich ihrer Herstellung und Handhabung weiter zu verbessern und ein Verfahren zum Herstellen solcher verbesserter Modulelemente anzugeben.
Diese Aufgabe wird erfindungsgemäß mit den kennzeichnenden Merkmalen des Patentanspruchs 1 bzw. des nebengeordneten Verfahrensanspruchs 14 gelöst. Die Merkmale der den unabhängigen Ansprüchen jeweils nachgeordneten Unteransprüche geben vorteilhafte Weiterbildungen an.

Ausgehend von dem eingangs genannten Stand der Technik werden die aneinandergrenzenden Modulelemente nunmehr direkt form- und/oder kraftschlüssig über Spantfüße miteinander verbunden, die mittelbar die Enden der Spanten auch mit den Randprofilen verbinden.

Des weiteren wird mit den vorgeschlagenen Merkmalen eine durch weitgehenden Entfall von Schweißverbindungen von thermisch bedingten Spannungen freie Modulkonfiguration in Differentialbauweise geschaffen, indem zumindest die Flächenbauteile der Modulelemente nur mit Umformfügetechniken oder Stanznieten miteinander verbunden werden.

Mit Umform-, Präge- oder Druckfügen werden hier "autogene" Verbindungen zwischen zwei überlappenden, relativ dünnwandigen Bauteilen oder Bauteil-Flächen bezeichnet, die durch Einbringen einer gemeinsamen lokalen Ausbeulung oder Warze mittels eines Druckstempels und eines Gesenks oder dgl. im Überlappungsbereich hergestellt werden, wobei durch die lokale Kaltverformung der Bauteile eine Art Druckknopf-Struktur entsteht.
Mit Stanznieten wird eine Verbindungstechnik bezeichnet, bei der geeignete Nieten ohne vorhergehendes Bohren durch zwei überlappte, relativ dünnwandige Bauteile (z. B. Spantflansch und Außenhaut) gepreßt/gestanzt werden und diese unter Kaltverformung und Teildurchdringung fest und dauerhaft miteinander verbinden. Auch hierbei ist auf der Blindseite ein Gegenhalter erforderlich. Der Stanzniet muß jedoch auf der Blindseite nicht durchbrechen.

Die vorzugsweise für Seitenwand, Fensterband, Dachvouten und Dach einer Großkarosserie bestimmten, bis zu 25 Meter langen Modulelemente werden in grundsätzlich untereinander gleicher oder ähnlicher Bauweise auf einem Gerippe von vorgeformten Spantprofilen und diese ggf. kaltgefügt rasterartig verbindenden Pfettenprofilen aufgebaut. Letztere werden nur bei Bedarf dort eingefügt, wo aufgrund großer Blechfelder Beulen vermieden werden müssen.
Die separaten Randprofile an den Längsrändern der Module werden zwecks Gewichtsminimierung vorzugsweise aus Kohle- oder Glasfaser-Werkstoff (Hybridbauweise) gefertigt, können aber selbstverständlich auch aus metallischen Werkstoffen bestehen. Die Außenhaut der Modulelemente besteht vorzugsweise, jedoch nicht zwingend, aus Sandwich-Blech (zwei dünne, korrosionsgeschützte Blechlagen mit zwischengelegter Kunststoffolie). Mit diesem Material wird eine Funktionsintegration von Lärmdämpfung und Korrosionsschutz erreicht.
Die Farbgestaltung und weiter erhöhter Korrosionsschutz werden bevorzugt durch abschließendes Aufbringen einer Schutzfolie realisiert, die außerdem die bislang noch sichtbaren, in der Hautebene liegenden Köpfe der Stanznieten glattflächig abdeckt. Spachteln der Oberfläche und innenseitiges Beschichten mit Antidröhnmasse ist danach nicht mehr erforderlich, so daß erhebliche Kosteneinsparungen gegenüber dem konventionellen Außenhautdesign erzielt werden können.

Im Laufe der Serienentwicklung hat sich eine Differential-Modulelementkonstruktion mit Spanten oder Säulen aus geschlossenen Querschnitten, insbesondere Vierkantrohren, als besonders vorteilhaft herausgestellt. Diese vereinen mehrere Vorteile:
- optimale Querschnittsform für eine programmgesteuerte Zurichtung des Längsverlaufs der abgelängten Spantprofile durch maschinelles Rollbiegen, womit beliebig gekrümmte Außenkonturen einer Großkarosserie in kürzester Zeit flexibel herstellbar sind;
- Gewichtsoptimierung durch Ausstechen von Löchern bzw. Herstellen von Gitter- oder Fachwerkstrukturen in den quer zur Außenhaut verlaufenden Wandbereichen mittels Laserschneiden möglich;
- gezielte Querschnittsschwächung und Gewichtsreduzierung durch vollständiges Wegschneiden von Wandabschnitten in gering belasteten Bereichen möglich, bei Erhalt der endseitigen homogen geschlossenen Anschlußquerschnitte;
- gute Anbindung der an den Spantenden befestigten Spantfüße für in der Trennfuge zwischen benachbarten Modulelementen liegende Verbindungselemente durch umlaufende Schweißnähte, vorzugsweise Laserschweißnähte;
- breite Basis zum Auflegen und Kaltbefestigen (z. B. Stanznieten) einer Außenhautbeblechung und ggf. zum Anbinden von quer zu den Spanten verlaufenden Beulsteifen (Pfetten).

Besonderes Augenmerk galt neben dem Aufbau der Modulelemente an sich dem Bereich der Übergänge von den Spanten zu den Randprofilen und den Verbindungen zwischen den aneinanderzufügenden Randprofilen benachbarter Modulelemente.
Mit einer für diese Modulelement-Bauweise besonders geeigneten Verbindungstechnik wird im Vergleich mit dem Stand der Technik aus der Standardisierung der Modul(längs-)ränder auch eine merkliche Vereinfachung und Beschleunigung der Montage bei mindestens gleicher mechanischer Festigkeit der Verbindungen erreicht. Diese Verbindungstechnik eignet sich auch zum Verbinden der Modulelemente mit einer metallischen Untergestellstruktur. Schließlich können auch Zwischenbodenelemente von Doppelstock-Fahrzeugkästen, die einen H-Querschnitt mit Boden- und Seitenwandteilen haben, seitenwandseitig mit gleichen randseitigen Verbindungen in die modulare Gesamtstruktur integriert werden.

Die Verbindungsmittel lassen sich nach dem Zusammenfügen zweier Modulelemente alle aus derselben Richtung fügen. Im Karosseriebau von Reisezugwagen wird das, wie schon im eingangs genannten Stand der Technik beschrieben, von der Außenseite des Wagenkastens her geschehen. Auch alle weiteren Fügearbeiten zum Verbinden der vorgefertigten Module untereinander werden von der Außenseite her ausgeführt. Deshalb können alle im Rohbau fertigen Module auf der Innenseite montagefertig, z. B. mit Innenverkleidungen, Leitungen, Fenstern versehen, vorbereitet werden. Vorteile dieser Bauweise und -elemente sind
- Schnellmontagefähigkeit ohne Nacharbeiten, mit der Option der Auslieferung vollständig oder teilweise zerlegter Fahrzeug-Karosserien und Endmontage beim Kunden,
- Demontagefähigkeit bzw. Trennbarkeit der Module für Reparatur- oder Recyclingzwecke (die kaltgefügten Verbindungsmittel können relativ unaufwendig gelöst werden, indem die freigelegten außenliegenden Schließköpfe abgeschält oder abgeschert werden. Die Bolzen können dann nach innen geschlagen werden, und die Module lassen sich voneinander trennen);
- Reduzierung des Arbeitsaufwands und des Gewichts sowie Verbesserung der Umweltverträglichkeit beim Recycling durch Entfall von Antidröhnmasse auf der Außenhaut-Innenseite.

Zumindest auf der im Montagezustand außenliegenden Seite der Bauteile wird man die Trennfugenränder in an sich bekannter Weise gegenüber der Hauptfläche versenkt anordnen, damit die (Schließ-) Köpfe der Verbindungselemente nicht hervorstehen.
Dem Blick können sie durch eine flächenbündige Abdeckleiste oder dgl. entzogen werden. Diese kann bei geeigneter Ausführung ebenfalls eine Funktion im Kräfte- und Momentenfluß im Trennfugenbereich wahrnehmen, z. B. eine Verstärkung gegen längs der Trennfuge auftretende Schubbelastungen.

Das zugehörige modulare Verbindungsprinzip ist außer zum Aufbau von Seitenwänden mit horizontalen Trennfugen auch zum stirnseitigen Verbinden von Seitenwandabschnitten sowie der Seitenwände mit Stirnwänden oder ganzen Fahrzeugköpfen an vertikalen Trennfugen verwendbar. An diesen Stellen kann ggf. das gesamte Bauteil nach dem Lösen der Verbindungselemente einfach abgenommen werden. Jedoch wird man dort innerhalb der Trennfuge vertikal tragfähige Formschlußelemente vorsehen müssen, um die Spannkräfte der axial zusammengespannten Spannstücke zu unterstützen.

Weitere Vorteile des Gegenstands der Erfindung gehen aus der Zeichnung eines Ausführungsbeispiels und deren sich im folgenden anschließender eingehender Beschreibung hervor. Es zeigen anhand von Modulelementen in Differentialbauweise zur Herstellung von Großkarosserien
- Fig. 1: eine vereinfachte perspektivische Darstellung eines Ausschnitts des Trennfugenbereichs zweier aneinandergesetzter Modulelemente von der Karosserieinnenseite her gesehen,
- Fig. 2: eine Ansicht des Ausschnitts gemäß Fig. 1, in der die beiden Modulelemente zur Verdeutlichung der Kaltfügeverbindungen auseinandergezogen wurden,
- Fig. 3: eine perspektivische Ansicht einer Modulelement-Variante mit anderer Konstruktion der Spanten und Verbindungselemente,
- Fig. 4: eine Schnittansicht im Bereich einer Verbindung zwischen zwei Modulelementen gemäß Fig. 3.

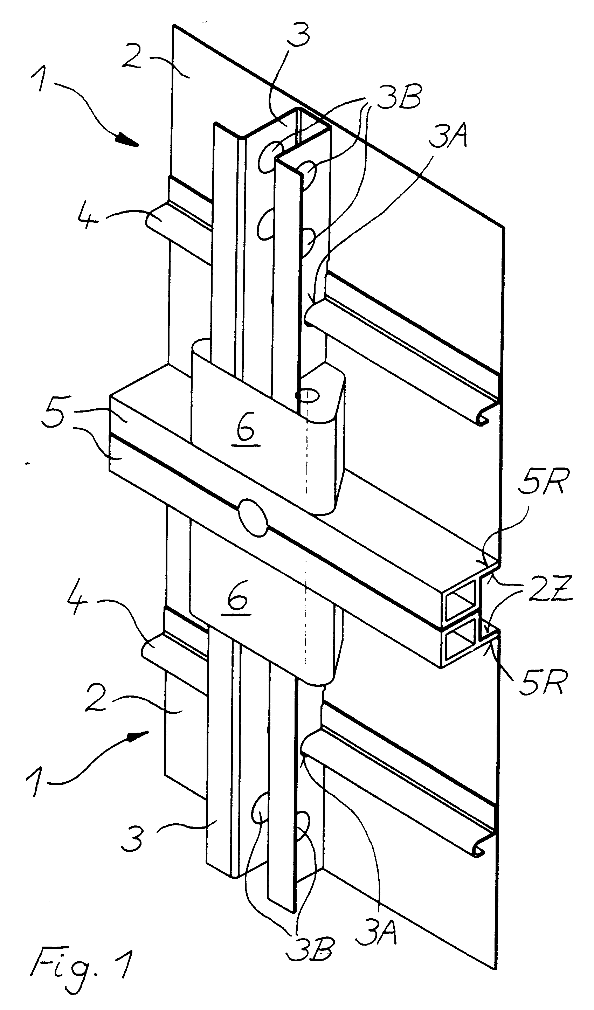

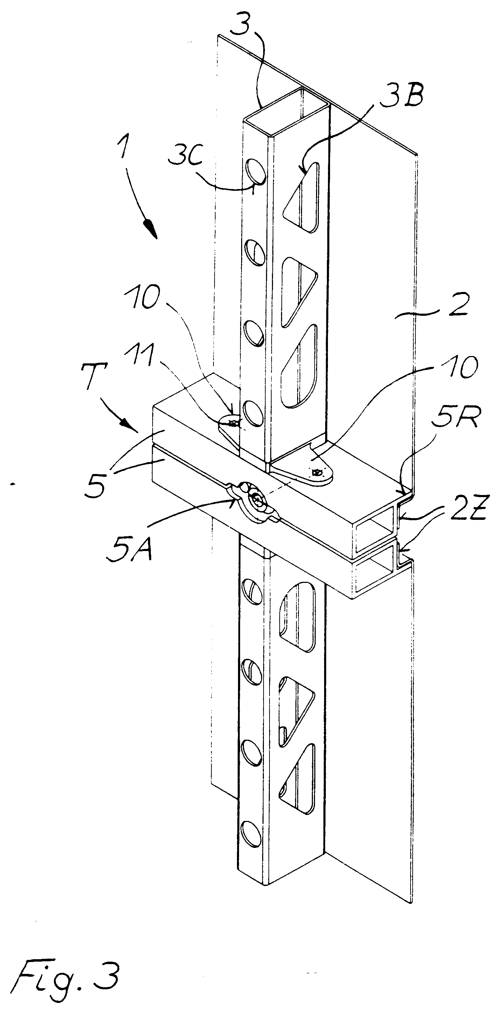

Gemäß **Fig. 1** besteht jedes Modulelement 1 im wesentlichen aus einer Außenhaut 2 mit randseitigen Abkantungen 2Z, die Außenhaut tragenden Spantprofilen 3, ggf. mit diesen überkreuz verbundenen Pfettenprofilen 4 zum Aussteifen der Außenhaut gegen Beulen und längsseitigen Randprofilen 5.
Die Spanten können in Z- oder Hutquerschnitt ausgeführt werden. Im ersten Fall ist in bekannter Weise einer der Z-Flansche als Auflagefläche für die Außenhaut des betreffenden Moduls vorgesehen, im zweiten, hier dargestellten Fall wird die Außenhaut auf den zentralen oder Mittelflansch des Hutprofils aufgelegt. Der oder die hiervon abgewandten Flansche der Spantprofile erstrecken sich mit dem durch den Profil-Steg bestimmten Abstand parallel zur Außenhaut 2. Sie können später zum Befestigen von Innenausbauelementen genutzt werden.
In einer anderen Variante (vgl. Fig. 3) haben die Spantprofile 3 zumindest an ihren Enden im Bereich der Trennfuge, die an die Randprofile 5 anstoßen, einen geschlossenen, bevorzugt vierkantigen Rohrquerschnitt.

Die fertig maßgenau abgelängten geraden Spantprofile 3 können, soweit notwendig, mit geeigneten Biegeverfahren vorzugsweise CNC-gesteuert maschinell in eine gewünschte Krümmungsform gebracht werden, die später die Außenkontur oder Hüllkurve des Fahrzeug-Wagenkastens im Querschnitt beschreibt. Hiernach können, vorzugsweise durch Laserschneiden, die senkrecht zur Außenhaut 2 verlaufenden Spant-Stege zwecks Gewichtsersparnis mit Ausschnitten 3B versehen werden. Bei Bedarf werden im selben Arbeitsgang aus den später zur Außenhaut gewandten Spant-Partien Ausnehmungen 3A, annähernd mit der Kontur der Pfettenprofile 4, herausgeschnitten.

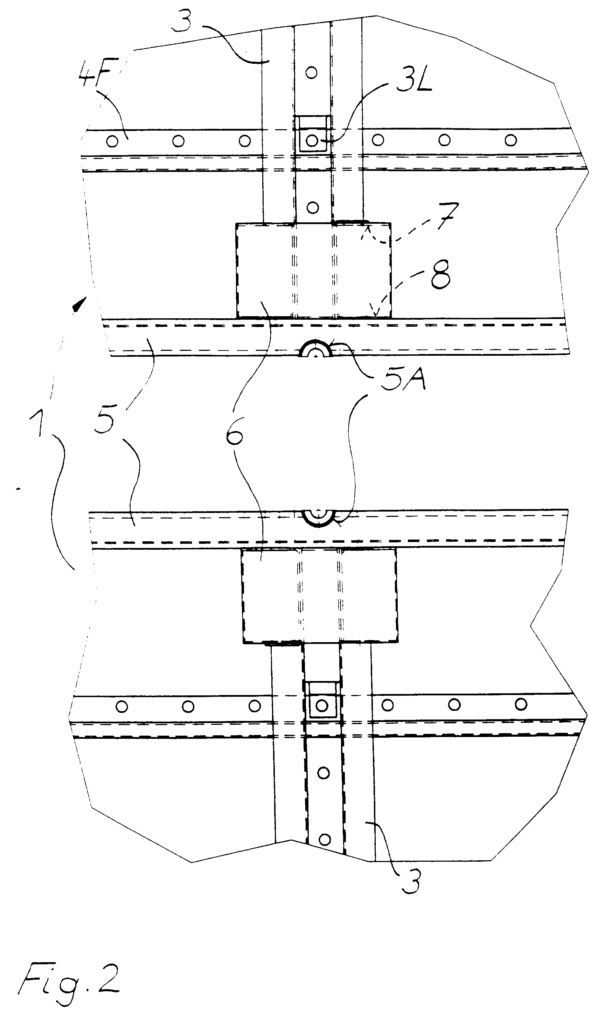

Nach dem parallelen Ausrichten und ggf. nach provisorischem Befestigen der Spantprofile 3 an den längslaufenden Randprofilen 5 in einer einfachen Stützvorrichtung werden ggf. die senkrecht zu den Spanten verlaufenden Pfettenprofile 4 in die außenhautseitigen Spant-Ausnehmungen 3A eingelegt.
In letzteren bleibt, wie in **Fig. 2** gut sichtbar ist, ein Lappen 3L von dem zur Außenhaut gewandten Steg oder Flansch stehen, mit dem ein Flansch 4F des Pfettenprofils 4 durch Prägefügen oder Stanznieten verbunden werden kann, die hier durch Kreise angedeutet sind. Der Lappen 3L wird geringfügig um die Dicke des Pfettenflanschs 4F gekröpft. Damit entstehen in den Kreuzungspunkten verzugsfreie, außenhautbündige Verbindungen zwischen den Spanten und Pfetten, so daß diese -zusammen mit den Randprofilen 5- ein tragfähiges Gerippe bilden.
Die genannten Verbindungen zwischen den Spanten und den Pfetten können mit flexibel einsetzbaren Werkzeugen sehr schnell und zuverlässig hergestellt werden.

Die Verbindungen zwischen den Spantprofilen 3 und den Randprofilen 5 der plattenförmigen oder auch in Querrichtung gebogenen Modulelemente 1 werden mit Hilfe sogenannter Spantfüße 6 hergestellt.
Die Spantfüße 6 können auf die Spantenden aufgeschoben und daran wiederum in nicht näher dargestellter Weise mit kaltfügbaren, hochmechanisierten Verbindungsmitteln (Umform- oder Prägefügen oder Stanznieten) befestigt werden. Sie bilden, in Längsrichtung der Spantprofile 3 gesehen, fügbare Flächen zum Herstellen fester Verbindungen im Übergangsbereich zwischen den Modulen.
Weil die Spantprofilkontur innerhalb einer Modulfamilie immer gleich bleibt, sind die Spantfüße 6 in jeweils bedarfsgerechter konstruktiver Gestaltung Standard-Massenteile, die billig in großen Stückzahlen beschafft werden können. Sie können z. B. als Kästen aus Blechplatinen mit allen notwendigen Ausnehmungen durch Laserschneiden präzise ausgeschnitten und hernach kalt in ihre endgültige Form gebogen werden, um einen hohen Mechanisierungsgrad zu erreichen.
Die Spantfüße 6 haben gemäß Fig. 2 einen oberen Boden 7 und einen unteren Boden 8, die vorzugsweise mit Abstand von einigen Zentimetern in parallelen Ebenen liegen. Der jeweils untere, näher zum Modulrand gelegene Boden 8 liegt auf dem Randprofil 5 auf und ist mit diesem vorzugsweise vernietet; diese Verbindung kann zentral in der Mittelebene des Spantfußes 6 oder symmetrisch beidseits von dessen Mitte angeordnet werden.

Die Randprofile 5 sind vorzugsweise als geschlossene Rechteck-Glas- oder Kohlefaserkastenprofile mit einer in Flucht mit einer der Wände abkragenden Rippe 5R ausgeführt. Ausgehend von dieser Grundform werden mit hochgenauen Bearbeitungsmaschinen nach dem bedarfsgerechten Ablängen auf Modullänge fortlaufend Aussparungen bzw. Durchbrüche in die Randprofile 5 eingebracht. Es ist aus Festigkeitsgründen anzustreben, durchlaufende Kohlefaser-Verstärkungen vornehmlich in den Querschnitt-Bereichen vorzusehen, die nicht von diesen Aussparungen unterbrochen werden. Mit der gewählten Differentialbauweise in Kaltfügetechnik verbindet sich der Vorteil einer bedarfsgerechten Werkstoffauswahl nach Festigkeits- und Leichtbaukriterien mit einer freien Kombination auch unterschiedlicher Werkstoffe und Halbzeuge an den Fügestellen.

Die Außenhaut-Sandwichbleche werden vom Coil maßgenau abgelängt, seitenparallel abgerichtet und an den Längsrändern mit den Abkantungen 2Z versehen. Diese steifen einerseits die Modulelemente bzw. die Außenhaut in Längsrichtung randseitig aus, andererseits bilden sie nach dem Zusammenfügen je zweier Module eine in Längsrichtung durchlaufende Trennfugen-Rinne, auf die später noch eingegangen wird.
Die Außenhaut 2 wird nun auf die ihr zugewandten Flanschen oder Stege der Spantprofile 3 aufgelegt. Ihre abgekanteten Ränder 2Z werden über die Rippen 5R der Randprofile 5 gezogen. In dem gegenüber der eigentlichen Außenhautkontur eingesenkten Randbereich werden die Längsränder des Außenhautblechs durch Nieten direkt mit den Randprofilen 5 verbunden. Wo der Rand der Außenhaut 2 über halbmondförmige Aussparungen 5A der Randprofile gelegt wird, sind auch darin entsprechende Aussparungen vorzusehen; diese können mit einer Laser-Schneidanlage schon beim Abrichten eingebracht werden. Schließlich wird die Außenhaut 2 vorzugsweise mit Flachkopf-Stanznieten an den Spanten und Pfetten befestigt.

Nach dieser Komplettierung des Modulrohbaus kann man schon mit dem weiteren Ausbau auf der Innenseite beginnen, weil der weitere Aufbau der Wagenstruktur wieder durch Kaltfügen erfolgt. Sollten besondere Schnittstellen (z. B. Leitungsdurchführungen oder dgl.) zwischen Modulelementen erforderlich sein, so können diese entweder in den Stirnbereich der Modulelemente verlegt oder über geeignete Steckverbindungen in der Trennfuge realisiert werden. Bei der bevorzugten Montage (und ggf. Demontage) von der Außenseite wird in keiner Weise in einen schon bestehenden Innenausbau einzugreifen sein, so daß dieser frei von Restriktionen im Bereich der Fügestöße bleibt. Man wird allenfalls geringfügige Freiräume vorzusehen haben, die das hindernisfreie Nach-Innen-Herausstoßen der Verbindungs- und Formschlußelemente bei einer allfälligen Demontage ermöglichen.

Auch gemäß **Fig. 3** besteht jedes Modulelement 1 in kaltgefügter Differential-Bauweise im wesentlichen aus mehreren, eine Außenhaut 2 tragenden Spantprofilen 5 und längsseitigen Randprofilen 5, die entlang einer Trennfuge T aneinanderzustoßen sind. Bei Bedarf enthält jedes Bauteil auch noch Pfetten oder Beulsteifen, die quer zu den Spanten und parallel zu den Randprofilen angeordnet sind und in der schon erörterten Weise mit den Spantprofilen und der Außenhaut zu verbinden sind.

Der gezeigte Ausschnitt stellt eine Einzel-Spantverbindung dar, die über die Länge der Trennfuge T so oft wiederholt anzuordnen ist, wie es den Lastannahmen entspricht. Die Länge der Trennfuge wird von der Größe der zu verbindenden Bauteile bestimmt, die bei Seitenwänden von Eisenbahn-Personenwagen 20 m lang sein können.

Das schon vorher beschriebene CNC-Rollbiegeverfahren ist mit geschlossenen, symmetrischen Spantprofil-Querschnitten am besten verzugsfrei durchführbar, so daß ein durchgehender Vierkant-Rohrquerschnitt für die Spantprofile 3 bevorzugt wird, der gleichzeitig hinreichende Auflageflächen für die Anbindung der Außenhaut und ggf. der Pfetten bietet. In die von der Außenhaut abgewandte Wand gegenüber den Stanzniet-Stellen sind dann Ausnehmungen bzw. Löcher 3C einzubringen, damit die Gegenhalter für die Stanznietwerkzeuge eingeführt werden können. Diese Löcher liegen also mit den Nietstellen in axialer Flucht.
Die Ausnehmungen 3B in den senkrecht zur Außenhaut gerichteten Spantprofil-Wandabschnitten oder -Stegen sind hier als Dreiecke mit gerundeten Ecken ausgebildet, so daß sich eine gewichts- und festigkeitsoptimierte Restfläche in Fachwerk- oder Gitterform ergibt. Man kann aber neben der runden Ausführung gemäß Fig. 1 auch andere Polygonformen (z. B. Trapeze, Rauten) für die Ausnehmungen vorsehen, wenn dies zweckmäßig erscheint; in der Herstellung durch Laserschneiden ist der Mehraufwand vernachlässigbar.
Aus der Anordnung der Löcher 3C im Verhältnis zu den Ausnehmungen 3B erkennt man, daß die Nietstellen bevorzugt im Bereich der außenhautnahen Materialhäufungen der seitlichen Spantstege angesiedelt sind.
Man kann darüber hinaus in gering belasteten Bereichen der Spantprofile 3 durch vollständiges Wegschneiden von Steg- oder Wandabschnitten eine gezielte Querschnittsschwächung und Gewichtsreduzierung erreichen, bei Erhalt der endseitigen homogen geschlossenen Anschlußquerschnitte. Man kann geschweißte Vierkantrohre verwenden, deren Längsnaht auf der von der Außenhaut entfernten Seite anzuordnen ist.

Die Randprofile 5 sind wiederum kastenförmige Glas- oder Kohlefaser-Kastenprofile mit einer in Flucht mit einer der Wände abkragenden Rippe 5R. Im Bereich der Kreuzungen zwischen Spant- und Randprofilen fortlaufend die Aussparungen bzw. Durchbrüche 5A in die Randprofile 5 eingebracht.

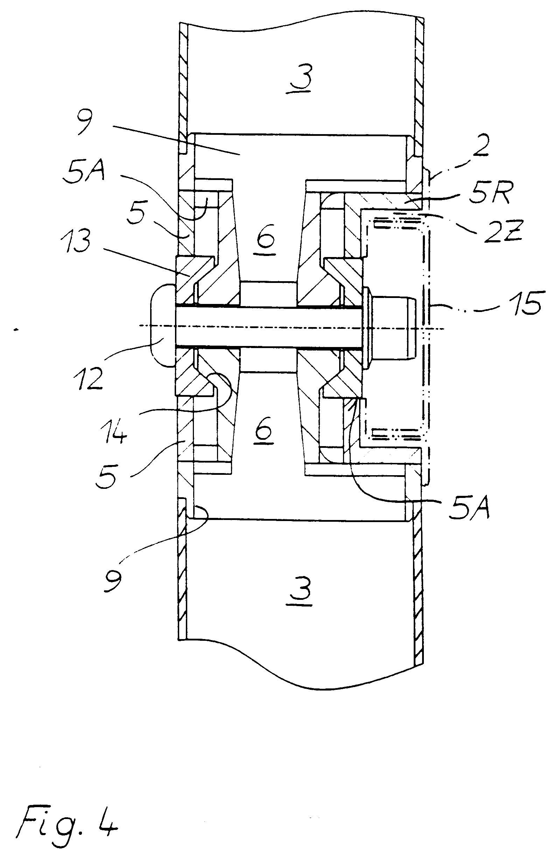

An die Spantenden beidseits der Trennfuge T sind wieder Spantfüße 6 in abgewandelter Form fest angeschlossen. Gemäß **Fig. 4**, die auch einen Querschnitt durch eine bevorzugte Verbindungsform zwischen den Modulelementen zeigt, haben die Spantfüße 6 jeweils einen in Spantrichtung abragenden kurzen Bund oder Stutzen 9, der in den geschlossenen Spantende-Rohrquerschnitt paßgenau einsetzbar ist. Hierauf wird er durch eine Rundum-Schweißnaht dauerhaft mit dem jeweiligen Spantprofil 3 verbunden. Es wäre in einer anderen Ausführungsform aber auch denkbar, die Spantfüße mittels größerer Materialüberdeckungen wiederum mit Kaltfügeverbindungen an die Spantprofile 3 anzuschließen. Beidseits des Stutzens 9 bzw. Spantprofils 3 ragen (Fig. 3) von den Spantfüßen 6 noch Flanschen 10 mit Bohrungen 11 senkrecht ab, mittels deren die Spantfüße 6 an die Randprofile 5 beidseits der darin eingeformten Durchbrüche angeschlossen werden, bevorzugt durch Nieten.

Weil die Spantprofilkontur innerhalb einer Modulfamilie immer gleich bleibt, sind die Spantfüße 6 in jeweils bedarfsgerechter konstruktiver Gestaltung Standard-Massenteile, ggf. Werksnormteile, die billig in großen Stückzahlen beschafft werden können. Sie können z. B. als Feingußteile mit sehr hoher Präzision hergestellt werden.

Zum parallelen Ausrichten der Spantprofile 2 und zum Befestigen der Spantfüße 5 an den längslaufenden Randprofilen 3 genügt eine einfache Stützvorrichtung, in die zunächst das jeweilige Randprofil und dann die Spantprofile eingelegt werden können, wobei die schon in das Randprofil eingeformten Aussparungen 5A die Spantpositionen vorgeben.

Wie man gut in **Fig. 4** erkennt, werden die Modulelemente über die paarigen Spantfüße 6 in der Trennfuge T mittels axial spannbarer Verbindungselemente (z. B. Schließringbolzen mit separatem, aufpreßbarem Schließring) 12 miteinander verbunden. Diese werden in aus Halbschalen gebildete Durchführungen der Spantfüße 6 eingelegt. Sie bestehen im wesentlichen aus einem zylindrischen Schaft mit einem angestauchten Kopf sowie dem Schließring. Vor dem Herstellen der Verbindung hat jeder Schließringbolzen ferner einen abreißbaren Zugschaft, der hier nicht dargestellt ist. Die Verbindungselemente 12 wirken mit Formschlußelementen 13, 14 zusammen, die die Trennfuge überbrücken und beim axialen Spannen der Verbindungselemente durch Keilwirkung eine hohe Vorspannkraft in der Trennfuge erzeugen.

Die vorstehenden Setzköpfe bzw. Schließringe der Verbindungselemente sind in der zwischen den Rippen 5R der Randprofile 5 von den randseitigen Abkantungen 2Z der Außenhaut 2 gebildeten Rinne zwischen den Modulen gegenüber der globalen Außenhautkontur abgesenkt aufgenommen. Abschließend werden sie mit einem Abdeckprofil 15 (wie hier strich-doppelpunktiert angedeutet, vorzugsweise mit U-Querschnitt) überdeckt, das die Rinne flächenbündig zur Außenhaut verschließt. Das Abdeckprofil 15 selbst kann einen weiteren Beitrag zum Stabilisieren der Trennfuge zwischen den Modulen gegen Längsschub leisten, indem es genau in die Trennfugenrinne eingepaßt wird und seine Schenkel mit den anstoßenden Abkant-Partien des Außenhautblechs verklebt werden. Im Übergangsbereich vom Dach zur Seitenwand kann es bei Bedarf ferner mit einer Regenrinne kombiniert werden.

In Abhängigkeit von der Länge der Trennfuge sind, wie schon erwähnt, mehrere Anschlußknoten gemäß Fig. 4 gebildet, die jeweils die Enden zweier aneinanderstoßender Spantabschnitte miteinander verbinden. Insgesamt können bei einem Wagenkasten oder Großbehälter damit umlaufende Ringspanten gebildet werden, die in vorgegebenen Abständen voneinander parallel verlaufen. Bei Personenwagen-Karosserien werden die Spantabstände wesentlich durch die Fensterteilung beeinflußt; man kann hier in der Regel keine gleichbleibenden Abstände vorsehen, sondern wird immer zwei Spanten an den Rändern einer Fenstersäule vorsehen, die schmaler ist als die sie einschließenden Fensterausschnitte.
Man kann in der Trennfugenebene in den Bereichen zwischen den vorstehend erörterten Spantfußverbindungen noch weitere, hier nicht gezeigte Formschlußelemente anordnen, die im Kraftfluß längs der Trennfugenebene Schub- und ggf. auch quer dazu gerichtete Beulkräfte aufnehmen können. In den erwähnten Personenwagen-Karosserien werden solche bevorzugt im Bereich unter- und oberhalb der Fensterausschnitte anzuordnen sein.
Zwischen den vorstehend beschriebenen Anschlußstellen können weitere Ausschnitte in die Randprofile 5 eingeformt werden, die im einfachsten Fall etwa halbzylindrische Umrisse haben und paarweise zusammen eine weitere Durchführung -mit freibleibendem Spalt- in der Trennfugenebene umschreiben. In diese Durchführung kann man dann ein weiteres, z. B. im wesentlichen zylindrisches Formschlußelement einsetzen, das an seinen Enden auf den Wandstegen der ausgeschnittenen Randprofile 5 aufliegt. Damit wird schon eine zusätzliche Schubabstützung längs der Trennfuge T erreicht. Das Einsatzelement kann bei der Demontage einfach herausgestoßen werden.
Wenn es innerhalb des Kastenfreiraums der Randprofile 5 einen vergrößerten Durchmesser hat, könnten dessen stirnseitige Krägen die Randprofile zusätzlich gegen Scherkräfte abstützen. Eine solche Form wird man jedoch nur dort einsetzen, wo bei der Demontage die damit verbundenen Bauteile nicht senkrecht zur Hauptfläche herausgezogen werden müssen.

Soll nun eine wie vorstehend aufgebaute Karosserie demontiert werden oder auch ein einzelnes Bauteil z. B. zu Reparaturzwecken aus dem Verbund gelöst werden, so müssen nach dem Entfernen der Abdeckleiste die Schließringe zerstört werden.

Danach kann man den Schließringbolzen 12 in Richtung seines Stauchkopfes nach innen aus der Durchführung heraustreiben. Ist dies an sämtlichen Fügestellen eines modularen Bauteils ausgeführt, so kann dieses mit geeigneten Mitteln senkrecht zu seiner Flächenausdehnung herausgezogen werden. Selbstverständlich sind vorher geeignete Stützmaßnahmen innerhalb der Karosserie zu treffen.

Es ist so auch möglich, in kurzer Zeit ein neues Bauteil mit entsprechenden Abmessungen an die Stelle eines etwa reparaturbedürftigen alten Bauteils einzubauen. Auf diese Weise kann ein Fahrzeug, das z. B. nach einer Flankenfahrt nur geringfügige Blechschäden erlitten hat, schneller wieder in den Verkehr gebracht werden als mit den herkömmlichen Reparaturmethoden.

## Patentansprüche

1. Modulelement (1) in Differentialbauweise, insbesondere zum Herstellen von Großkarosserien wie Schienenfahrzeug - Wagenkästen oder Behältern, umfassend
- eine Außenhaut (2),
- mehrere, eine vorbestimmte Länge aufweisende und Auflageflächen für die Außenhaut (2) bildende Spantprofile (3), die jeweils einen seitlichen Abstand voneinander haben und
- zwei Randprofile (5), von denen jedes die auf gleicher Seite gelegenen Enden der Spantprofile (3) untereinander verbindet und Aussparungen (5A) zum Durchstecken von kaltfügbaren Verbindungsmitteln (6,12) aufweist, wobei zum Verbinden von zwei aneinandergrenzenden Modulelementen (1) jeweils zwei Randprofile (5) paarweise entlang einer Trennfuge (T) aneinanderlegbar sind, dadurch gekennzeichnet, dass
- die Aussparungen (5A) in den aneinanderlegbaren Randprofilen (5) jeweils einander gegenüberliegend sowie in der Verlängerung der zugeordneten Spantprofile (3) vorgesehen sind und in jeder Aussparung (5A)
- ein Spantfuß (6) eingelassen ist, der im Bereich der Aussparung (5A) durch Kaltfügeverbindungen (10,11) mit dem Randprofil (5) einerseits sowie mit dem Ende des zugehörigen Spantprofils (3) andererseits fest verbunden ist und zum Herstellen einer direkten form- und/oder kraftschlüssigen Verbindung mit einem entsprechenden, gegenüberliegenden Spantfuß (6) eines angrenzenden Modulelements (1) mittels der kaltfügbaren Verbindungsmittel (12) dient.

2. Modulelement nach Anspruch 1,
dessen Spantprofile (3) ferner ggf. in Querschnittsüberlappungen (3L, 4F) mit in Ausnehmungen (3A) der Spantprofile eingelegten Pfettenprofilen (4) durch kaltfügbare Verbindungen verbunden sind.

3. Modulelement nach Anspruch 1 oder 2,
dessen Außenhaut (2) mittels Stanznieten auf den Spantprofilen (3), den Randprofilen (5) und ggf. Pfettenprofilen (4) befestigt ist.

4. Modulelement nach einem der vorstehenden Ansprüche,
dessen Außenhaut (2) aus korrosionsgeschütztem Sandwich-Stahlblech besteht.

5. Modulelement nach einem der vorstehenden Ansprüche,
dessen Randprofile (5) aus faserverstärktem Kunststoff bestehen.

6. Modulelement nach Anspruch 5,
in dem die Faserverstärkung der Randprofile (5) insbesondere in nicht von Aussparungen (5A) durchbrochenen Längsbereichen aus Kohlefasern besteht.

7. Modulelement nach einem der vorstehenden Ansprüche,
dessen Randprofile (5) einen Kastenquerschnitt mit einer davon frei auskragenden Rippe (5R) haben, deren freies Ende an die Außenhaut (2) anstößt.

8. Modulelement nach Anspruch 7,
dessen Außenhaut (2) im Bereich der Rippe (5R) der Randprofile (5) z-förmig einwärts abgekantet ist, so daß sie beim Zusammensetzen zweier zu verbindender Modulelemente (1) eine gegenüber deren Hauptfläche eingesenkte Rinne bildet, in der außenhautseitige Köpfe der kaltfügbaren Verbindungsmittel (12) versenkbar und mittels einer Abdeckleiste (15) oder dgl. flächenbündig abdeckbar sind.

9. Modulelement nach einem der vorstehenden Ansprüche,
dessen Außenhaut (2) mit einer die in der Hautebene liegenden Stanznieten-Köpfe glattflächig abdeckenden Schutzfolie bedeckt ist.

10. Modulelement nach einem der vorstehenden Ansprüche,
dessen Spantprofile (3) zumindest in ihrem zum Befestigen der Spantfüße (6) vorgesehenen Endbereich einen geschlossenen, insbesondere Vierkant-Rohrquerschnitt haben, in welchen ein Stutzen (9) des jeweiligen Spantfußes (6) vor dessen Befestigung paßgenau einsetzbar ist.

11. Modulelement nach Anspruch 10,
dessen Spantfüße (6) als Feingußteile hergestellt und mit dem jeweiligen Spantende durch eine umlaufende Schweißnaht, insbesondere Laserschweißnaht, fest verbunden sind.

12. Modulelement nach einem der vorstehenden Ansprüche,
dessen Spantprofile (3) in senkrecht zur Außenhaut orientierten Wandabschnitten oder Stegen mit gewichtsreduzierenden Aussparungen (3B) versehen sind.

13. Modulelement nach Anspruch 12,
in dem die Aussparungen (3B) in den Spantprofilen (3) zum Bilden einer Gitter- oder Fachwerkstruktur der Restfläche des betreffenden Wandabschnitts als Polygone, insbesondere Dreiecke, mit gerundeten Ecken ausgeführt sind.

14. Verfahren zum Herstellen eines Modulelements nach Anspruch 1, gekennzeichnet durch folgende Schritte:
- eine Anzahl konturgebender Spantprofile wird auf eine vorbestimmte Länge geschnitten, insbesondere durch Laserschneiden;
- für jeden Längsrand des Modulelements wird ein Randprofil zugeschnitten und mit Aussparungen an den Verbindungsstellen mit den Spanprofilen vorgesehen;
- jeweils ein Randprofil wird an den gleichen Enden der parallel aufgereihten Spanten mittels an diesen Enden befestigter Spantfüße kalt befestigt, welch letztere auch zum Verbinden der Modulelemente untereinander dienen;
- eine insbesondere durch Laserschneiden seitenparallel abgerichtete Außenhaut wird auf zur Außenhaut hin gewandte Auflageflächen der Spanten aufgelegt und mit diesen Auflageflächen und mit den Randprofilen kalt, insbesondere durch Flachkopf-Stanznieten, dauerhaft verbunden.

15. Verfahren nach Anspruch 14, bei dem die konturgebenden abgelängten, insbesondere aus einem geschlossenen Rohrprofil bestehenden Spanten entsprechend der geforderten Außenkontur des jeweiligen Modulelements kalt, insbesondere durch mechanisiertes Rollbiegen, in eine vorgegebene Bogenform gebracht werden.

16. Verfahren nach einem der vorstehenden Verfahrensansprüche, bei dem -ggf. nach dem fakultativen Kaltverformen- senkrecht zur Außenhaut verlaufende Stege der Spantprofile mit gewichtsreduzierenden Ausnehmungen versehen werden.

17. Verfahren nach Anspruch 16, bei dem die die Ausnehmungen umgebenden Restquerschnitte ein Fachwerk- oder Gittermuster bilden, dessen zur Außenhaut orientierte Materialhäufungen bevorzugt im Bereich der vorgegebenen Stanznietpunkte liegen.

18. Verfahren nach einem der vorstehenden Verfahrensansprüche, bei dem die zur Außenhaut gewandte Seite der Spantprofile -ggf. nach dem fakultativen Kaltverformen- mit Ausschnitten zum Durchführen von Pfetten (Beulsteifen) versehen werden, welche Ausschnitte insbesondere durch Laserschneiden eingebracht werden und in deren Bereich Lappen stehen bleiben, mittels deren die Pfetten kalt mit den Spanten verbunden werden.

19. Verfahren nach einem der vorstehenden Verfahrensansprüche, mit dem die an den Randprofilen zu befestigenden Ränder der Außenhaut z-förmig abgekantet werden, um eine gegenüber der globalen Außenhautfläche abgesenkte Rinne zu bilden.

## Claims

1. Modular element (1) of differential construction, in particular for producing large bodies such as railway-vehicle carriage bodies or containers, comprising
- a shell (2),
- a plurality of frame profiles (3) which are of a predetermined length, forming bearing surfaces for the shell (2) and are each spaced apart from one another by a lateral distance, and
- two border profiles (5), of which each connects to one another those ends of the frame profiles (3) which are located on the same side and has apertures (5A) for the insertion of cold-joinable connecting means (6, 12), it being possible, for the purpose of connecting two adjacent modular elements (1), for in each case two border profiles (5) to be placed against one another in pairs along a parting joint (T), characterized in that
- the apertures (5A) in the border profiles (5) which can be placed against one another are each provided opposite one another and in extension of the associated frame profiles (3), and in each aperture (5A)
- there is introduced a frame foot (6) which, in the region of the aperture (5A) is fixedly connected, by cold-joining connections (10, 11), to the border profile (5), on the one hand, and to the end of the associated frame profile (3), on the other hand, and which serves for producing a direct positively locking and/or frictionally locking connection to a corresponding, opposite frame foot (6) of an adjacent modular element (1) by the cold-joinable connecting means (12).

2. Modular element according to Claim 1, whose frame profiles (3) in addition, are connected, if appropriate, in cross-sectional overlaps (3L, 4F) to stringer profiles (4), which are introduced in clearances (3A) of the frame profiles, by cold-joinable connections.

3. Modular element according to Claim 1 or 2, whose shell (2) is fastened on the frame profiles (3), the border profiles (5) and, if appropriate, stringer profiles (4) by means of punch riveting.

4. Modular element according to one of the preceding claims, whose shell (2) consists of a corrosion-resistant sheet-steel sandwich.

5. Modular element according to one of the preceding claims, whose border profiles (5) consist of fibre-reinforced plastic.

6. Modular element according to Claim 5, in which the fibre reinforcement of the border profiles (5), in particular in the longitudinal regions which are not interrupted by apertures (5A), consists of carbon fibres.

7. Modular element according to one of the preceding claims, whose border profiles (5) have a box cross-section with a rib (5R) which extends freely therefrom and whose free end butts against the shell (2).

8. Modular element according to Claim 7, whose shell (2) is bent off inwards in a z-shaped manner in the region of the rib (5R) of the border profiles (5), with the result that, upon assembly of two modular elements (1) which are to be connected, said shell forms a channel which is sunken with respect to the main surface of the modular elements and in which shell-side heads of the cold-joinable connecting means (12) can be positioned in a sunken manner and covered in a surface-flush manner by means of a covering strip (15) or the like.

9. Modular element according to one of the preceding claims, whose shell (2) is covered by a protective film which covers, with a smooth surface, the punching-rivet heads which are located in the shell plane.

10. Modular element according to one of the preceding claims, whose frame profiles (3), at least in their end region which is provided for the purpose of fastening the frame feet (6), have a closed cross-section, in particular one in the form of a rectangular tube, into which a stub (9) of the respective frame foot (6) can be fitted before the latter is fastened.

11. Modular element according to Claim 10, whose frame feet (6) are produced as precision castings and are fixedly connected to the respective frame end by a weld seam, in particular a laser weld seam, all the way round.

12. Modular element according to one of the preceding claims, whose frame profiles (3) are provided with weight-reducing apertures (3B) in webs or wall sections oriented perpendicularly with respect to the shell.

13. Modular element according to Claim 12, in which the apertures (3B) in the frame profiles (3) are configured as polygons, in particular triangles, with rounded corners, for the purpose of forming a trelliswork or latticework structure of the remainder of the surface area of the relevant wall section.

14. Process for producing a modular element according to Claim 1, characterized by the following steps:
- a number of shaping frame profiles are cut to a predetermined length, in particular by laser cutting;
- for each longitudinal border of the modular element, a border profile is cut to length and provided with apertures at the points of connection to the cutting [sic] profiles;
- in each case one border profile is fastened, by cold working, at the same ends of the frames, which are lined up in parallel, by means of frame feet fastened at these ends, said frame feet also serving for connecting the modular elements to one another;
- a shell, which is adjusted to have parallel sides, in particular by laser cutting, is placed in position on shell-facing bearing surfaces of the frames and connected on a permanent basis by cold working, in particular by flat-head punch riveting, to these bearing surfaces and to the border profiles.

15. Process according to Claim 14, in which, in accordance with the required outer contour of the respective modular element, the shaping, cut-to-length frames, in particular comprising a closed tube profile, are cold worked, in particular by mechanized curling into a predetermined arc shape.

16. Process according to one of the preceding process claims, in which - if appropriate following the optional cold working - frame-profile webs running perpendicularly with respect to the shell are provided with weight-reducing clearances.

17. Process according to Claim 16, in which the clearance-enclosing remaining cross-sections form a latticework or trelliswork pattern whose shell-facing material accumulations are preferably located in the region of the predetermined punch-riveting points.

18. Process according to one of the preceding process claims, in which - if appropriate following the optional cold working - the shell-facing side of the frame profiles are [sic] provided with cutouts for the passage of stringers (buckling-resistance means), which cutouts are introduced, in particular, by laser cutting and in the region of which there remain lugs by means of which the stringers are connected, by cold working, to the frames.

19. Process according to one of the preceding process claims, by means of which the shell borders which are to be fastened to the border profiles are bent off in a z-shaped manner in order to form a channel which is sunken with respect to the shell surface as a whole.

## Revendications

1. Elément modulaire (1) à construction différentielle, en particulier pour la fabrication de grandes carrosseries telles que des véhicules ferroviaires, caisses de wagon ou récipients, comprenant
- une paroi extérieure (2);
- plusieurs profilés de raidissement (3) présentant une longueur prédéterminée et formant des surfaces d'appui pour la paroi extérieure (2), qui sont respectivement à une certaine distance les uns des autres, et
- deux profilés d'arêtes (5), dont chacun relie entre elles les extrémités des profilés de raidissement (3) situées du même côté et présente des encoches (5A) pour le passage de moyens de fixation s'assemblant à froid (6, 12), deux profilés d'arêtes (5) pouvant être respectivement assemblés par paire le long d'un joint de séparation (T) pour relier deux éléments modulaires (1) adjacents, caractérisé en ce que
- les encoches (5A) dans les profilés d'arêtes (5) pouvant être assemblés se font respectivement face et sont également prévues dans le prolongement des profilés de raidissement (3) correspondants et, dans chaque encoche (5A),
- un pied de raidissement (6) est encastré, qui, à proximité de l'encoche (5A), est relié solidement à l'aide de liaisons s'assemblant à froid (10, 11) d'une part avec le profilé d'arête (5) et d'autre part avec l'extrémité du profilé de raidissement (3) correspondant et sert à former une liaison directe à épousement de forme et/ou à transfert de force avec un pied de raidissement (6) correspondant opposé d'un élément modulaire adjacent (1) à l'aide des moyens de fixation (12) s'assemblant à froid.

2. Elément modulaire suivant la revendication 1, dont les profilés de raidissement (3) sont de plus le cas échéant reliés dans des recouvrements de section (3L, 4F) à l'aide de liaisons s'assemblant à froid à des profilés de pannes (4) insérés dans des encoches (3A) des profilés de raidissement.

3. Elément modulaire suivant la revendication 1 ou 2, dont la paroi extérieure (2) est fixée à l'aide de rivets estampés sur les profilés de raidissement (3), les profilés d'arêtes (5) et le cas échéant des profilés de pannes (4).

4. Elément modulaire suivant l'une des revendications précédentes, dont la paroi extérieure (2) est fabriquée à partir de tôle d'acier sandwich protégée contre la corrosion.

5. Elément modulaire suivant l'une des revendications précédentes, dont les profilés d'arêtes (5) sont fabriqués en matière plastique renforcée par des fibres.

6. Elément modulaire suivant la revendication 5, dans lequel le renforcement par des fibres des profilés d'arêtes (5) se compose de fibres de carbone, en particulier dans les zones longitudinales non traversées par les encoches (5A).

7. Elément modulaire suivant l'une des revendications précédentes, dont les profilés d'arêtes (5) ont une section en caisson avec une aile (5R) dépassant librement, dont l'extrémité libre aboute à la paroi extérieure (2).

8. Elément modulaire suivant la revendication 7, dont la paroi extérieure (2) est repliée vers l'intérieur en forme de Z à proximité de l'aile (5R) des profilés d'arêtes (5), de sorte que lors de l'assemblage de deux éléments modulaires (1) à relier, elle forme un canal encastré par rapport à sa surface principale, dans lequel les têtes des moyens de fixation s'assemblant à froid (12) situées du côté de la paroi extérieure s'enfoncent et peuvent être recouvertes à affleurement d'une latte de recouvrement (15) ou équivalent.

9. Elément modulaire suivant l'une des revendications précédentes, dont la paroi extérieure (2) est recouverte d'un film de protection recouvrant à affleurement les têtes des rivets estampés situées dans le plan de la paroi extérieure (2).

10. Elément modulaire suivant l'une des revendications précédentes, dont les profilés de raidissement (3) ont au moins dans leur zone d'extrémité prévue pour fixer les pieds de raidissement (6), une section fermée, en particulier tubulaire carrée, dans laquelle une tubulure (9) du pied de raidissement (6) correspondant peut être insérée exactement avant d'être fixé.

11. Elément modulaire suivant la revendication 10, dont les pieds de raidissement (6) sont fabriqués comme pièces coulées de précision et sont reliés solidement à l'extrémité correspondante du profilé de raidissement par un cordon de soudure périphérique, en particulier de soudure au laser.

12. Elément modulaire suivant l'une des revendications précédentes, dont les profilés de raidissement (3) sont pourvus de découpes (3B) réduisant le poids dans des éléments de paroi ou des nervures orientés perpendiculairement à la paroi extérieure.

13. Elément modulaire suivant la revendication 12, dans lequel les découpes (3B) dans les profilés de raidissement (3) sont réalisées en forme de polygones, en particulier de triangles, à coins arrondis, afin de former une structure réticulée ou en treillis de la surface restante de la portion de paroi concernée.

14. Procédé de fabrication d'un élément modulaire suivant la revendication 1, caractérisé par les étapes suivantes :
- on coupe à une longueur prédéterminée un certain nombre de profilés de raidissement définissant un contour, en particulier par coupe au laser ;
- on coupe à mesure un profilé d'arête pour chaque bord longitudinal de l'élément modulaire et on prévoit des encoches aux points de liaison aux profilés de raidissement ;
- on fixe par assemblage à froid un profilé d'arête respectivement aux mêmes extrémités des profilés de raidissement alignés parallèlement à l'aide de pieds de raidissement fixés à ces extrémités, ces derniers servant également à relier les éléments modulaires entre eux, et
- on pose une paroi extérieure aux parois alignées parallèlement, en particulier par coupe au laser, sur les surfaces d'appui des profilés de raidissement faisant face à la paroi extérieure et on la relie de manière durable par assemblage à froid à ces surfaces d'appui et aux profilés d'arêtes, en particulier à l'aide de rivets estampés à tête plate.

15. Procédé suivant la revendication 14, au cours duquel les profilés de raidissement définissant un contour, coupés à longueur, constitués en particulier d'un profilé tubulaire fermé, sont cintrés à froid suivant une courbure prédéterminée, en particulier par roulage mécanisé, conformément au contour extérieur requis de l'élément modulaire concerné.

16. Procédé suivant l'une des revendications précédentes, au cours duquel, le cas échéant après le formage à froid facultatif, des nervures des profilés de raidissement perpendiculaires à la paroi extérieure sont pourvues de découpes réduisant le poids.

17. Procédé suivant la revendication 16, au cours duquel les sections résiduelles entourant les découpes forment une structure réticulée ou en treillis dont les parties non lacunaires orientées vers la paroi extérieure se trouvent de préférence à proximité des points prédéfinis de rivetage par estampage.

18. Procédé suivant l'une des revendications précédentes, au cours duquel les côtés des profilés de raidissement tournés vers la paroi extérieure sont pourvus, le cas échéant après le formage à froid facultatif, de découpes pour le passage de pannes (raidisseurs), lesquelles découpes sont en particulier réalisées par découpe au laser et à proximité desquelles des languettes subsistent, à l'aide desquelles on relie les pannes aux profilés de raidissement par assemblage à froid.

19. Procédé suivant l'une des revendications précédentes, au cours duquel les bords de la paroi extérieure à fixer aux profilés de raidissement sont repliés en forme de Z, afin de former un canal encastré par rapport à la surface globale de la paroi extérieure.
